# EUROPÄISCHE PATENTANMELDUNG

(11) **EP 4 627 909 A1**
(43) Veröffentlichungstag der Anmeldung: **08.10.2025**
(21) Anmeldenummer: 24168602.1
(22) Anmeldetag: 04.04.2024
(51) Int. Cl.: A01G 9/28

(54) **BEGRENZUNG FÜR EIN HOCHBEET MIT VARIABLEM FASSUNGSVERMÖGEN**

(71) Anmelder: Lorenz Kunststofftechnik GmbH, 49134 Wallenhorst-Hollage (DE)
(72) Erfinder: Lorenz, Thomas, 49134 Wallenhorst-Hollage (DE)
(74) Vertreter: Sandvoß, Stefanie

(57) **Zusammenfassung**

Die Erfindung betrifft eine Begrenzung für ein Hochbeet, umfassend mehrere miteinander zu einer Einfassung verbundene Wandelemente, von denen jedes eine erste Stirnseite und eine gegenüberliegende zweite Stirnseite aufweist, die jeweils Befestigungselemente aufweisen, wobei jedes Wandelement außerdem eine zwischen der ersten Stirnseite und der zweiten Stirnseite verlaufende erste Längsseite und eine dieser gegenüberliegende und ebenfalls zwischen der ersten Stirnseite und der zweiten Stirnseite parallel zu der ersten Längsseite verlaufende zweite Längsseite aufweist, wobei jedes Wandelement an seiner ersten Stirnseite und an seiner zweiten Stirnseite mittels einer Steckverbindung mit einem benachbarten Wandelement verbunden ist, wobei jedes Wandelement senkrecht zu beiden sich gegenüberliegenden Längsseiten einen zwischen diesen verlaufenden Querschnitt aufweist, der alternierend angeordnete erste und zweite Abschnitte umfasst, wobei sich die ersten Abschnitte und die zweiten Abschnitte in Bezug auf eine Längsmittelachse des Querschnitts auf entgegengesetzten Seiten der Längsmittelachse erstrecken, und wobei ein Zwischenboden senkrecht zu den Wandelementen in variabler Höhe innerhalb der durch die Wandelemente gebildeten Begrenzung anordnbar ist, indem dieser mit den ersten bzw. zweiten Abschnitten gegenüberliegender Wandelemente in Eingriff gebracht wird.

## Beschreibung

Die vorliegende Erfindung betrifft eine Begrenzung für ein Hochbeet, das sich wie herkömmliche Hochbeete durch eine aufgrund seiner Höhe angenehme und rückenschonende Bearbeitbarkeit auszeichnet. Im Gegensatz zu vorbekannten Begrenzungen für Hochbeete bietet die erfindungsgemäße Begrenzung jedoch die Möglichkeit zur Errichtung eines Hochbeetes mit variablem, an die individuelle Bepflanzung angepasstem Fassungsvermögen und zeichnet sich darüber hinaus durch eine kompakte Stapelbarkeit im zerlegten Zustand aus, die eine platzsparende Verpackung beispielsweise in einem Karton erlaubt.

Die meisten aus dem Stand der Technik bekannten Hochbeete, die nicht aus natürlichen Materialien, wie z.B. Natursteinen errichtet und damit individuell sind, werden von Metall- oder Kunststoffrahmen eingefasst, welche oft in Massenproduktion gefertigt werden. Der Nachteil solcher Metall- oder Kunststoffrahmen liegt in der mangelnden Flexibilität hinsichtlich der Gestaltung der Beete, da die fertigen Rahmen keinen Spielraum für eine individuelle Anordnung zulassen. Es gibt jedoch auch einige bekannte Lösungsansätze, die eine zumindest teilweise individuelle Gestaltung zulassen.

So beschreibt beispielsweise die DE 20 2015 102 607 U1 einen Rahmen für ein Hochbeet, dessen Seitenwände aus Holzbetonbauelementen bestehen, die zwischen sich einen Raum begrenzen, der zum Bepflanzen des Beetes mit Nährboden befüllt werden kann. Jede Seitenwand des Hochbeetes wird dabei von mehreren der an den Stirnseiten stufenförmig ausgebildeten Bauelementen gebildet, die mittels eines Stahldorns miteinander sowie mit einem stabilisierenden Stahlband verbunden werden. Aufgrund der stufenförmigen Stirnseiten der einzelnen Bauelemente können diese zu einem ausschließlich rechteckigen Hochbeet zusammengefügt werden, dessen Seitenlängen und -höhen jedoch variabel sind.

Die DE 10 2013 108 553 A1 beschreibt eine Wandkonstruktion für den Garten- und Landschaftsbau, die zur Errichtung von Hochbeeten geeignet ist. Die Wandkonstruktion weist dabei verschiedene senkrecht aufgestellte Längselemente auf, die ihrerseits eine Aufnahme für zwischen die Längselemente einzuschiebende Wandelemente aufweisen. Die auf diese Weise erhältlichen Hochbeete sind zwar in der Seitenlänge und Seitenhöhe variabel, allerdings wird auch das Fassungsvermögen der Beete durch deren Seitenlänge und Seitenhöhe definiert und ist nicht variabel.

Weiterhin beschreibt die DE 20 2005 000 418 U1 eine Einfassung für ein Hochbeet mit vertikal angeordneten Wandungen aus faserverstärktem Kunststoff. Die einzelnen Wandelemente sind entweder rechteckig oder U-förmig ausgebildet und mittels Schraub- oder Nietverbindungen miteinander verbunden. Die so errichteten Hochbeete weisen jedoch ebenfalls bei einer gegebenen Abmessung kein variables Fassungsvermögen auf.

Die DE 20 2016 105 953 U1 beschreibt eine Einfassung für Rasenflächen und Beete aus zumindest zwei miteinander verbindbaren Blechprofilen. Jedes Blechprofil weist dabei an einem Ende Ausnehmungen und am anderen Ende Steckelemente auf, die in entsprechende Ausnehmungen eines anderen Blechprofiles eingreifen können. Zusammengesteckte Blechprofile werden mittels eines Verbindungsbolzens miteinander befestigt. Aufgrund der Biegsamkeit der Blechprofile können diese auch zu einer geschlossenen Umrandung geformt werden, wobei das von der Umrandung umgebene Fassungsvermögen des Beetes nicht variabel ist.

Die DE 10 2017 104 344 B3 beschreibt eine aus einzelnen Wandelementen zusammengesetzte Begrenzung für Hochbeete, wobei die einzelnen Wandelemente über Steckverbindungen vorzugsweise nach Art einer Nut-Feder-Verbindung in einem beliebigen Winkel zueinander angeordnet werden können. Die äußere Form der auf diese Weise errichteten Hochbeete ist daher variabel, allerdings ist das Fassungsvermögen der Beete bei einer gegebenen Form auch hier nicht variabel.

Es gibt daher im Stand der Technik keine zufriedenstellende Lösung für eine Errichtung von Hochbeeten, die bei einer gegebenen äußeren Form, die durch die Abmessung und Anordnung der Wandelemente, aus denen es zusammengesetzt ist, definiert wird, ein variables Fassungsvermögen bieten. Dieses wäre jedoch wünschenswert, da Hochbeete in Abhängigkeit ihrer Bepflanzung unterschiedlich viel Bodenmaterial, z.B. Pflanzerde, aufnehmen können sollten, um einerseits den individuellen Bedürfnissen der Pflanzen gerecht zu werden und gleichzeitig eine Kosten- und Materialoptimierung zu ermöglichen. Denn in einem Hochbeet angepflanzte tiefwurzelnde Pflanzen benötigen zum Gedeihen um ein Vielfaches mehr Erde als in einem Hochbeet angepflanzte flachwurzelnde Pflanzen. Für tiefwurzelnde Pflanzen wird also ein Hochbeet mit entsprechend hohen Wandelementen benötigt, die ein vergleichsweise großes Volumen zur Aufnahme von viel Pflanzerde umschließen. Pflanzt man jedoch in dem gleichen Hochbeet statt tiefwurzelnden Pflanzen flachwurzelnde Pflanzen an, die nur ein deutlich geringeres Volumen an Pflanzerde zum Gedeihen benötigen, so ist bei herkömmlichen Hochbeeten aufgrund des nicht variablen Fassungsvermögens dennoch die Anschüttung mit Erde bis etwas unterhalb des oberen Endes der durch die Wandelemente gebildeten Begrenzung notwendig, da auch die flachwurzelnden Pflanzen in der gleichen Höhe innerhalb dieser Begrenzung wie die tiefwurzelnden Pflanzen gepflanzt werden müssen, insbesondere um ihren Lichtbedarf zu decken und von außen bequem zugänglich zu sein. Ein großer Teil der in dem Hochbeet befindlichen Erde dient dann jedoch nicht Pflanzzwecken, sondern ausschließlich der Volumenauffüllung des Beetes.

Diesem Problem wird im Stand der Technik nur unzureichend begegnet, indem es Wannen gibt, die in ein Hochbeet eingehängt werden können, sodass der unter der Wanne liegende Teil der durch die Wandelemente umschlossenen Beetbegrenzung leer bzw. luftgefüllt bleibt und nur die Wanne mit Erde befüllt wird. Dies ermöglicht zwar eine Kosten- und Materialersparnis, da nur die Wanne und nicht der darunterliegende, von der Begrenzung umgebene Raum mit Erde angefüllt werden muss, beschränkt jedoch die äußere Form des Hochbeetes durch die Abmessungen der Wanne, deren Ränder an der durch die Wandelemente gebildeten Begrenzung für das Hochbeet anliegen müssen, um keine unschönen Lücken zwischen der Wanne und der durch die Wandelemente gebildeten Begrenzung zu bilden.

### Aufgabe der Erfindung

Es ist die Aufgabe der vorliegenden Erfindung, eine alternative Begrenzung für ein Hochbeet bereitzustellen, die die aus dem Stand der Technik bekannten Nachteile überwindet und sich insbesondere durch die Möglichkeit der veränderbaren Einstellbarkeit eines individuellen Fassungsvermögens sowie durch eine kompakte Lagerbarkeit im demontierten Zustand auszeichnet.

### Allgemeine Beschreibung der Erfindung

Die Erfindung löst diese Aufgabe mit den Merkmalen der Ansprüche und insbesondere mit einer Begrenzung für ein Hochbeet, umfassend mehrere miteinander zu einer Einfassung verbundene Wandelemente, von denen jedes eine erste Stirnseite und eine gegenüberliegende zweite Stirnseite aufweist, die jeweils Befestigungselemente aufweisen, wobei jedes Wandelement außerdem eine zwischen der ersten Stirnseite und der zweiten Stirnseite verlaufende erste Längsseite und eine dieser gegenüberliegende und ebenfalls zwischen der ersten Stirnseite und der zweiten Stirnseite parallel zu der ersten Längsseite verlaufende zweite Längsseite aufweist, und wobei jedes Wandelement an seiner ersten Stirnseite und an seiner zweiten Stirnseite mittels einer Steckverbindung mit einem benachbarten Wandelement verbunden ist.

Jedes Wandelement der erfindungsgemäßen Begrenzung weist senkrecht zu beiden sich gegenüberliegenden Längsseiten einen zwischen diesen verlaufenden Querschnitt auf, der alternierend angeordnete erste und zweite Abschnitte umfasst, wobei sich die ersten Abschnitte und die zweiten Abschnitte in Bezug auf eine Längsmittelachse des Querschnitts auf entgegengesetzten Seiten der Längsmittelachse erstrecken, wobei ein Zwischenboden senkrecht zu den Wandelementen in variabler Höhe innerhalb der durch die Wandelemente gebildeten Begrenzung anordnbar ist bzw. angeordnet ist, indem dieser mit den ersten bzw. zweiten Abschnitten gegenüberliegender Wandelemente in Eingriff gebracht wird bzw. indem dieser in die ersten bzw. zweiten Abschnitte gegenüberliegender Wandelemente eingreift.

Die ersten und zweiten Abschnitte des Querschnitts der Wandelemente senkrecht zu deren sich gegenüberliegenden Längsseiten können beispielsweise Ausbuchtungen zu entgegengesetzten Seiten der Längsmittelachse des Querschnitts sein, z.B. halbkreisförmige oder eckige Ausbuchtungen. Es ist dabei wichtig, dass die ersten Abschnitte der Querschnitte jedes Wandelements identisch geformt und angeordnet sind und auch die zweiten Abschnitte der Querschnitte jedes Wandelements identisch geformt und angeordnet sind, damit im demontierten Zustand eine lückenlose Stapelbarkeit der einzelnen Wandelemente aufeinander möglich ist, die wiederum eine kompakte Verpackung ermöglicht, insbesondere eine kompakte Verpackung aller zu einer Begrenzung gehörenden Wandelemente in einem Karton. Vorzugsweise sind daher alle Wandelemente mit gleichen Abmessungen identisch. Gemäß einer bevorzugten Ausführungsform sind demnach Wandelemente mit gleichen Abmessungen im demontierten Zustand, in dem diese keine Einfassung bilden, platzsparend stapelbar, indem die ersten Abschnitte und die zweiten Abschnitte mehrerer Wandelemente bei Anordnung dieser Wandelemente übereinander ohne Zwischenraum aufeinander zu liegen kommen.

Wandelemente mit unterschiedlichen Abmessungen unterscheiden sich vorzugsweise ausschließlich in ihrer Länge und/oder Höhe, weisen jedoch jeweils senkrecht zu ihren sich gegenüberliegenden Längsseiten ebenfalls einen Querschnitt auf, der alternierend angeordnete erste und zweite Abschnitte umfasst, wobei sich die ersten Abschnitte und die zweiten Abschnitte in Bezug auf eine Längsmittelachse des Querschnitts auf entgegengesetzten Seiten der Längsmittelachse erstrecken. Bei Wandelementen, die sich nur in ihrer Länge unterscheiden, ist der Querschnitt vorzugsweise identisch, aber auch bei Wandelementen, die sich in ihrer Höhe unterscheiden, ist die Form und der Abstand der ersten und zweiten Abschnitte vorzugsweise identisch, wobei die Anzahl der ersten und zweiten Abschnitte unterschiedlich sein kann. Auf diese Weise besteht auch bei unterschiedlich langen und/oder hohen Wandelementen die Möglichkeit einer lückenlosen, kompakten Stapelbarkeit, indem die ersten und zweiten Abschnitte aufeinander angeordneter Wandelemente aufeinander zu liegen kommen. Auch in dieser Ausführungsform ist daher beispielsweise eine Verpackung aller Bestandteile der Begrenzung, die zum größten Teil aus den einzelnen Wandelementen gebildet wird, in nur einem Karton möglich.

Bei herkömmlichen Hochbeeten wird das Füllmaterial, z.B. Nährboden oder Erde, in der Regel bis zu einer Füllhöhe zwischen 0,50 m und 1,00 m innerhalb einer von Wandelementen gebildeten Einfassung angeordnet, was bei der Bepflanzung bzw. Bearbeitung des Beetes eine angenehme und rückenschonende Haltung erlaubt. Die meisten Pflanzen benötigen jedoch keine so große Menge des zur Anfüllung auf die vorgenannte Höhe erforderlichen Füllmaterials um zu gedeihen, sodass dieses nur der Raumausfüllung dient, um die gewünschte Anfüllhöhe innerhalb der Begrenzung zu erreichen.

Diesem Problem begegnet die vorliegende Erfindung, indem sie einen Zwischenboden bereitstellt, der in beliebiger Höhe zwischen der von den Wandelementen gebildeten Einfassung anordnbar ist. Dieser Zwischenboden der erfindungsgemäßen Begrenzung kann einteilig ausgebildet sein oder mehrere Zwischenbodenteile umfassen. Unabhängig davon, ob der Zwischenboden einteilig oder mehrteilig ausgebildet ist, weist dieser vorzugsweise wie auch die Wandelemente senkrecht zu zwei sich gegenüberliegenden Seiten einen Querschnitt auf, der alternierend angeordnete erste und zweite Abschnitte umfasst, wobei sich die ersten Abschnitte und die zweiten Abschnitte in Bezug auf eine Längsmittelachse des Querschnitts auf entgegengesetzten Seiten der Längsmittelachse erstrecken. Besonders bevorzugt ist dieser Querschnitt des Zwischenbodens zumindest abschnittsweise identisch zu dem Querschnitt der Wandelemente, sodass der Zwischenboden im demontierten Zustand der Begrenzung platzsparend auf einem Wandelement gelagert werden kann, wobei die ersten und die zweiten Abschnitte der Querschnitte des Zwischenbodens und der Wandelemente jeweils vorzugsweise ohne nennenswerte Zwischenräume aufeinander zu liegen kommen.

Gemäß einer bevorzugten Ausführungsform der erfindungsgemäßen Begrenzung weist jedes Wandelement an einer seiner Längsseiten ein Abschlussprofil auf, das eine Platte umfasst oder aus dieser besteht, wobei das Wandelement mit dem Abschlussprofil auf einem Untergrund anordnbar ist. Unter einer Platte wird dabei ein flächiges Gebilde verstanden, das insbesondere eine zumindest zweimal so große Fläche umfasst wie die Längsseite, an der das Abschlussprofil angeordnet ist. Durch das Abschlussprofil wird die Standfestigkeit der erfindungsgemäßen Begrenzung auf einem Untergrund deutlich erhöht. Zudem wird auch bei der Errichtung der Begrenzung auf nicht festen, nachgebenden Untergründen, z.B. Erde oder Gras, durch die größere Oberfläche, die das Abschlussprofil mit sich bringt, das Gewicht der Begrenzung auf eine größere Fläche verteilt, was ein Einsinken der Begrenzung in den Untergrund reduziert oder verhindert.

Gemäß einer weiteren bevorzugten Ausführungsform sind die Wandelemente der erfindungsgemäßen Begrenzung ausschließlich mittels Steckverbindungen miteinander verbunden. Dafür umfasst die erfindungsgemäße Begrenzung für ein Hochbeet mehrere Wandelemente, die jeweils an ihrer ersten Stirnseite und an ihrer gegenüberliegenden zweiten Stirnseite Befestigungselemente aufweisen. Vorzugsweise sind sowohl die Befestigungselemente der ersten Stirnseite als auch die Befestigungselemente der zweiten Stirnseite hakenförmig ausgebildet, wobei die Haken der ersten Stirnseite eine von den Haken der zweiten Stirnseite abweichende, insbesondere entgegengesetzte, Orientierung aufweisen. Dies ermöglicht es, dass ein Wandelement an seiner ersten Stirnseite über eine Steckverbindung mit der zweiten Stirnseite eines anderen Wandelementes und an seiner zweiten Stirnseite über eine Steckverbindung mit der ersten Stirnseite eines weiteren Wandelementes verbunden ist.

Jedes Wandelement weist erfindungsgemäß zwei gegenüberliegende Stirnseiten auf, die jeweils die zwei gegenüberliegenden Längsseiten der Wandelemente verbinden, wobei die Stirnseiten und die Längsseiten zwischen sich eine im Wesentlichen rechteckige Fläche begrenzen. Dabei kann eine erfindungsgemäße Begrenzung, die mehrere miteinander verbundene Wandelemente umfasst oder aus diesen besteht, aus identisch oder unterschiedlich dimensionierten Wandelementen zusammengesetzt sein. Im Falle unterschiedlich dimensionierter Wandelemente können diese z.B. eine unterschiedliche Länge, d.h. unterschiedlich lange Längsseiten, oder auch eine unterschiedliche Höhe, d.h. unterschiedlich lange Stirnseiten, aufweisen. Eine Begrenzung für ein Hochbeet, die im Bereich der einzelnen Wandelemente eine unterschiedliche Höhe aufweist, eignet sich beispielsweise für die Errichtung eines Hochbeetes auf einem abfallenden bzw. geneigten Untergrund.

Die an der ersten und der zweiten Stirnseite befindlichen Haken können über die gesamte Länge der Stirnseiten oder nur über einen Teil ihrer Länge verteilt sein. Bevorzugt sind die Haken dabei einteilig mit dem Wandelement ausgebildet.

Gemäß einer bevorzugten Ausführungsform der Erfindung sind die Haken im Wesentlichen in Form eines rechten Winkels ausgebildet, wobei an der ersten Stirnseite der eine Schenkel des Winkels ebenfalls rechtwinklig an der ersten Stirnseite angeordnet ist, und der zweite Schenkel des Winkels parallel zur ersten Stirnseite verläuft und in Richtung der ersten Längsseite weist. Entsprechend ist an der zweiten Stirnseite der eine Schenkel des Winkels ebenfalls rechtwinklig an der zweiten Stirnseite angeordnet, wobei der zweite Schenkel des Winkels parallel zu der zweiten Stirnseite verläuft und in Richtung der zweiten Längsseite weist.

Gemäß einer alternativen Ausführungsform können die Haken an der ersten und der zweiten Stirnseite auch konkav bzw. konvex geformt sein.

Es ist ein besonderer Vorteil der erfindungsgemäßen Begrenzung für ein Hochbeet, dass die einzelnen Wandelemente besonders einfach, schnell und ohne Werkzeug zusammengesteckt werden können. Für die Verbindung der einzelnen Wandelemente ist dabei die Steckverbindung, durch welche die Wandelemente mittels ihrer korrespondierenden Befestigungselemente miteinander verbunden werden, völlig ausreichend und sorgt für eine gute Stabilität, sodass eine zusätzliche Verbindung der Wandelemente mittels zusätzlicher Befestigungsmittel, z.B. Schrauben oder Nägeln, nicht nötig ist. Entsprechend sind die Wandelemente bevorzugt auch ausschließlich mittels der Steckverbindungen miteinander verbunden und eine bevorzugte Ausführungsform der erfindungsgemäßen Begrenzung für ein Hochbeet besteht aus den mittels Steckverbindungen verbundenen Wandelementen.

Optional sind die Wandelemente, die zu der gleichen Seite der Begrenzung für ein Hochbeet gehören, durch eine Leiste voneinander beabstandet, die parallel zu und zwischen den Längsseiten zweier benachbarter Wandelemente angeordnet ist.

Die Wandelemente, die die erfindungsgemäße Begrenzung für ein Hochbeet bilden, sind vorteilhafterweise aus Kunststoff, Holz oder Metall gefertigt und weisen optional eine Beschichtung auf. Ein besonders bevorzugtes Material, aus dem die Wandelemente gefertigt sind, ist faserverstärkter Kunststoff.

Vorteilhaft an der vorliegenden Erfindung ist, dass die erfindungsgemäße Begrenzung für ein Hochbeet je nach den benötigten Anforderungen sowohl in der Länge als auch in der Breite erweitert werden kann, indem weitere Wandelemente mit einer bestehenden Verbindung von Wandelementen verbunden werden. Dies ist sowohl zum Zeitpunkt der erstmaligen Errichtung des Hochbeetes als auch zu einem späteren Zeitpunkt möglich.

Die Erfindung betrifft auch ein Verfahren zur Errichtung eines Hochbeetes, das die folgenden Schritte umfasst:
- Bereitstellen mehrerer Wandelemente, von denen jedes eine erste Stirnseite und eine gegenüberliegende zweite Stirnseite aufweist, die jeweils Befestigungselemente aufweisen, wobei jedes Wandelement außerdem eine zwischen der ersten Stirnseite und der zweiten Stirnseite verlaufende erste Längsseite und eine dieser gegenüberliegende und ebenfalls zwischen der ersten Stirnseite und der zweiten Stirnseite parallel zu der ersten Längsseite verlaufende zweite Längsseite aufweist, wobei jedes Wandelement senkrecht zu beiden sich gegenüberliegenden Längsseiten einen zwischen diesen verlaufenden Querschnitt aufweist, der alternierend angeordnete erste und zweite Abschnitte umfasst, wobei sich die ersten Abschnitte und die zweiten Abschnitte in Bezug auf eine Längsmittelachse des Querschnitts auf entgegengesetzten Seiten der Längsmittelachse erstrecken;
- Verbinden jedes Wandelementes an seiner ersten Stirnseite und an seiner zweiten Stirnseite mit einem benachbarten Wandelement, wobei die Verbindung mittels einer Steckverbindung erfolgt und wodurch eine Einfassung gebildet wird; und
- Anordnen eines Zwischenbodens senkrecht zu den Wandelementen in beliebiger Höhe innerhalb der durch die Wandelemente gebildeten Einfassung, indem der Zwischenboden mit den ersten bzw. zweiten Abschnitten gegenüberliegender Wandelemente in Eingriff gebracht wird, vorzugsweise ebenfalls mittels einer Steckverbindung.

In dem erfindungsgemäßen Verfahren zur Errichtung eines Hochbeetes sind die Wandelemente so beschaffen wie mit Bezug auf die erfindungsgemäße Begrenzung für ein Hochbeet beschrieben. Durch die Verbindung einer beliebigen Anzahl Wandelemente, die optional zumindest teilweise in ihrer Länge und/oder Höhe variieren, lassen sich dadurch Hochbeete errichten, die einer individuell gewünschten Geometrie entsprechen bzw. sich an ein vorgegebenes Platzangebot und/oder an einen vorgegebenen Untergrund anpassen.

Vorzugsweise wird in dem erfindungsgemäßen Verfahren auf dem Zwischenboden Füllmaterial, z.B. Erde oder Pflanzsubstrat, angeordnet, während unterhalb des Zwischenbodens ein luftgefüllter Raum verbleibt, der durch den Zwischenboden, mehrere Wandelemente sowie den Untergrund, auf dem die Wandelemente zu einer Einfassung angeordnet sind, begrenzt wird.

### Genaue Beschreibung der Erfindung

Die Erfindung wird nun genauer anhand von Ausführungsbeispielen und mit Bezug auf die Figuren beschrieben, in denen
- Figur 1 eine schematische Ansicht einer erfindungsgemäßen Begrenzung für ein Hochbeet mit variablem Fassungsvermögen zeigt,
- Figur 2 eine schematische Schnittansicht einer erfindungsgemäßen Begrenzung für ein Hochbeet zeigt,
- Figur 3 eine schematische Ansicht einer weiteren Ausführungsform einer erfindungsgemäßen Begrenzung für ein Hochbeet zeigt,
- Figur 4 eine schematische Ansicht einer weiteren Ausführungsform einer erfindungsgemäßen Begrenzung für ein Hochbeet zeigt,
- Figur 5 eine schematische Ansicht einer kompakten Verpackung von Komponenten einer erfindungsgemäßen Begrenzung für ein Hochbeet in einem Karton zeigt,
- Figur 6 eine schematische Ansicht einer weiteren Ausführungsform einer erfindungsgemäßen Begrenzung für ein Hochbeet zeigt.

In den Figuren bezeichnen gleiche Bezugsziffern funktionsgleiche Teile.

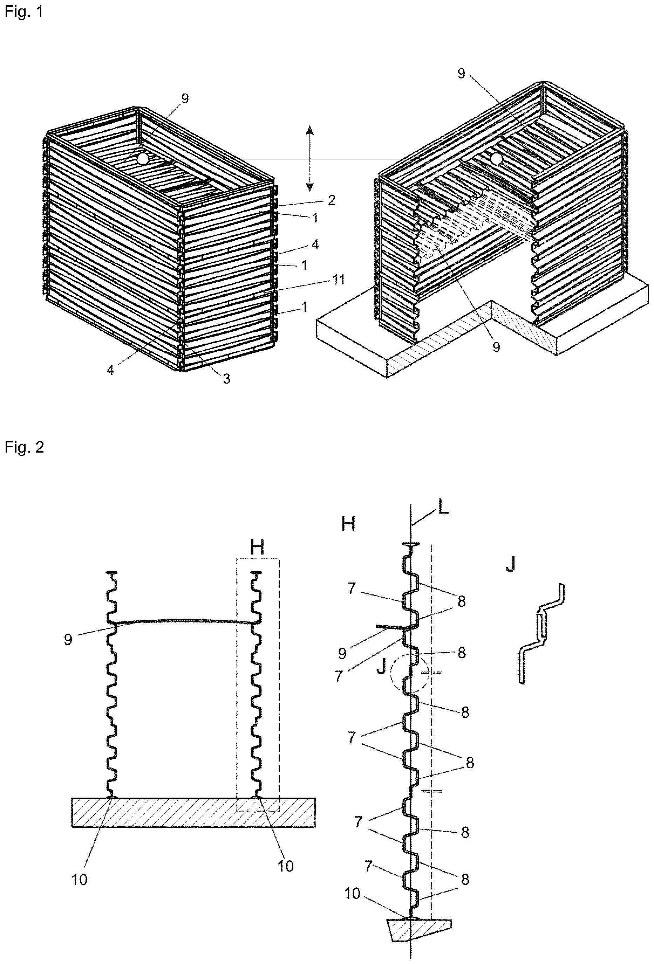

In der Figur 1 ist eine schematische Ansicht einer erfindungsgemäßen Begrenzung für ein Hochbeet mit variablem Fassungsvermögen gezeigt. Dieses umfasst an jeder Seite drei übereinander angeordnete Wandelemente **1,** wobei jeweils zwischen den Wandelementen **1** einer Seite Leisten **11** als Abstandshalter angeordnet sind. Die Wandelemente **1** weisen jeweils eine erste Stirnseite **2** und eine gegenüberliegende zweite Stirnseite **3** auf, die jeweils Befestigungselemente **4** aufweisen, wobei jedes Wandelement **1** außerdem eine zwischen der ersten Stirnseite **2** und der zweiten Stirnseite **3** verlaufende erste Längsseite **5** und eine dieser gegenüberliegende und ebenfalls zwischen der ersten Stirnseite **2** und der zweiten Stirnseite **3** parallel zu der ersten Längsseite **5** verlaufende zweite Längsseite **6** aufweist. Jedes Wandelement **1** ist an seiner ersten Stirnseite **2** und an seiner zweiten Stirnseite **3** mittels einer Steckverbindung mit einem benachbarten Wandelement **1** verbunden, in der gezeigten Ausführungsform jeweils in einem rechten Winkel. Innerhalb der durch die von den insgesamt zwölf Wandelementen **1** gebildeten Begrenzung ist ein Zwischenboden **9** in einem 90°-Winkel zu den ihn kontaktierenden Wandelementen **1** angeordnet. Dieser Zwischenboden **9** ist im linken Teil der Zeichnung etwa im oberen Drittel der von den Wandelementen **1** gebildeten Begrenzung angeordnet. Durch den den linken und den rechten Teil der Zeichnung verbindenden Pfeil ist angedeutet, dass der Zwischenboden **9** höhenverstellbar ist. Im rechten Teil der Zeichnung ist der Zwischenboden **9** gestrichelt in einer anderen Höhe angeordnet, etwa auf halber Höhe der von den Wandelementen **1** gebildeten Begrenzung.

Die Figur 2 zeigt im linken Teil eine schematische Schnittansicht einer erfindungsgemäßen Begrenzung für ein Hochbeet, in der der Zwischenboden **9** etwa im oberen Drittel der von den Wandelementen **1** gebildeten Begrenzung angeordnet ist. Der Ausschnitt H zeigt, dass jedes Wandelement **1** senkrecht zu beiden sich gegenüberliegenden Längsseiten **5, 6** einen zwischen diesen verlaufenden Querschnitt aufweist, der alternierend angeordnete erste Abschnitte **7** und zweite Abschnitte **8** umfasst, wobei sich die ersten Abschnitte **7** und die zweiten Abschnitte **8** in Bezug auf eine Längsmittelachse **L** des Querschnitts auf entgegengesetzten Seiten der Längsmittelachse **L** erstrecken. Der Zwischenboden **9** ist senkrecht zu den Wandelementen **1** in variabler Höhe innerhalb der durch die Wandelemente **1** gebildeten Begrenzung angeordnet, indem dieser mit den ersten bzw. zweiten Abschnitten **7, 8** gegenüberliegender Wandelemente **1** in Eingriff gebracht wird, beispielsweise kann der Zwischenboden **9** in beliebiger Höhe auf den sich gegenüberliegenden ersten bzw. zweiten Abschnitten **7, 8** gegenüberliegender Wandelemente **1** aufliegen. Der Ausschnitt J zeigt in der Vergrößerung die Verbindung zweier übereinander angeordneter Wandelemente **1.**

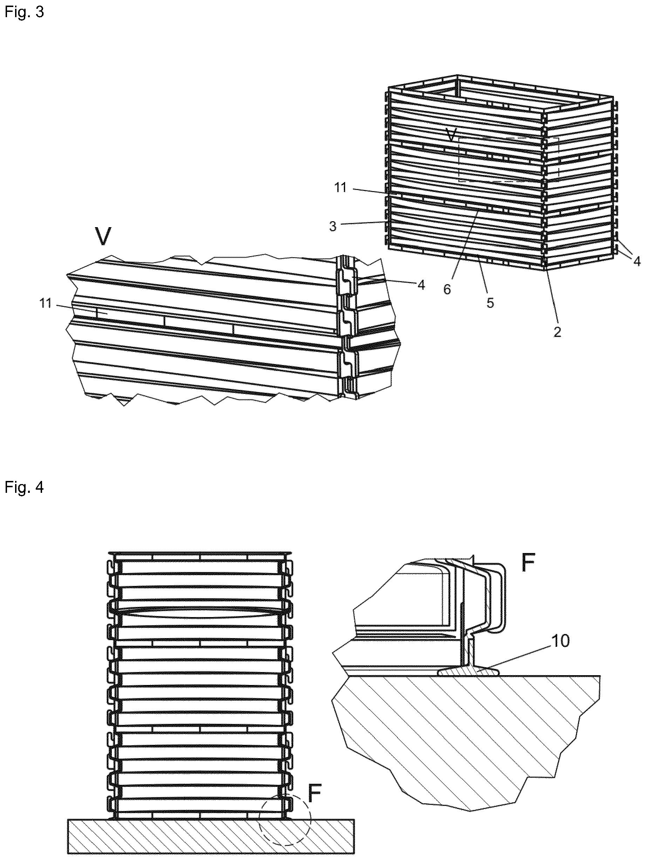

In der Figur 3 ist eine perspektivische Ansicht einer weiteren Ausführungsform einer erfindungsgemäßen Begrenzung für ein Hochbeet mit einem vergrößerten Ausschnitt V gezeigt. Hier ist eine bevorzugte Steckverbindung benachbarter Wandelemente **1** gezeigt. Diese weisen Befestigungselemente **4** an ihrer ersten Stirnseite **2** und an ihrer zweiten Stirnseite 3 auf, die hakenförmig ausgebildet sind, wobei die Haken der ersten Stirnseite **2** eine von den Haken der zweiten Stirnseite **3** entgegengesetzte Orientierung aufweisen. Auf diese Weise ist jedes Wandelement **1** an seiner ersten Stirnseite **2** über eine Steckverbindung mit der zweiten Stirnseite **3** eines anderen Wandelementes **1** und an seiner zweiten Stirnseite **3** über eine Steckverbindung mit der ersten Stirnseite **2** eines weiteren Wandelementes **1** verbunden. Benachbarte Wandelemente **1** sind durch eine Leiste **11** voneinander beabstandet.

In der Figur 4 ist eine schematische Ansicht einer weiteren Ausführungsform einer erfindungsgemäßen Begrenzung für ein Hochbeet gezeigt. In dieser Ausführungsform weist jedes Wandelement **1** an einer seiner Längsseiten **5, 6** ein Abschlussprofil **10** auf, das eine Platte umfasst, mit der das Abschlussprofil **10** auf einem Untergrund angeordnet ist. In dem vergrößerten Ausschnitt F ist erkennbar, dass durch das Abschlussprofil **10** die Fläche vergrößert wird, mit der die durch die Wandelemente **1** gebildeten Seiten der erfindungsgemäßen Begrenzung den Untergrund kontaktieren. Durch das Abschlussprofil **10** wird also das Gewicht der Begrenzung auf eine größere Fläche verteilt, wodurch ein Einsinken der Begrenzung in nicht festen Untergrund deutlich reduziert wird.

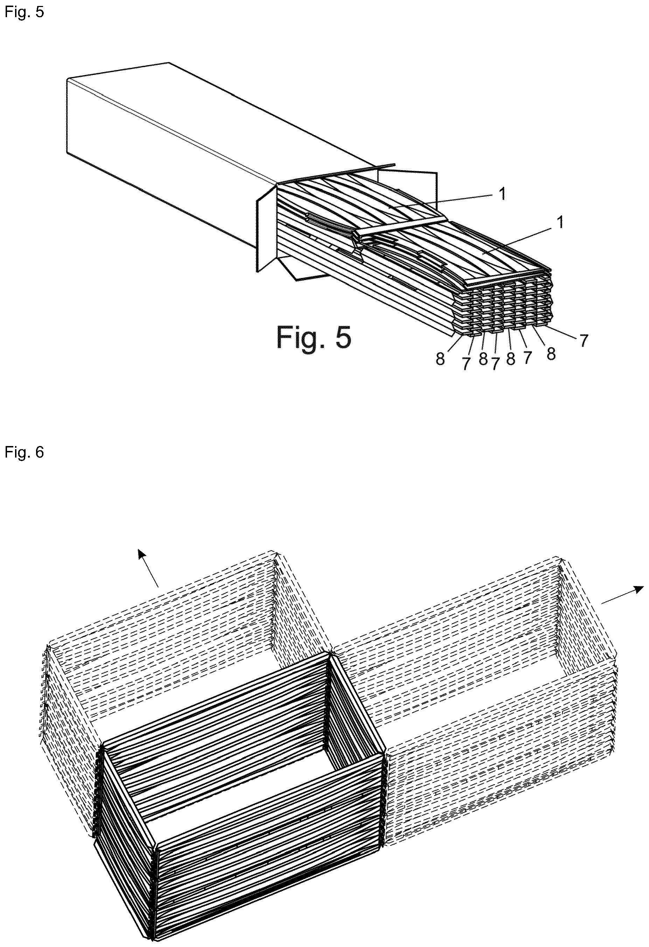

Die Figur 5 zeigt den zweiten Hauptvorteil der vorliegenden Erfindung neben der Einstellung eines variablen Fassungsvermögens, nämlich die kompakte Stapelbarkeit bzw. Lagerung einer Vielzahl von Wandelementen **1** in einer Verpackung. Dies wird dadurch ermöglicht, dass die ersten Abschnitte **7** und die zweiten Abschnitte **8** jedes Wandelementes **1** bei einer Stapelung der Wandelemente **1** ohne wesentliche Zwischenräume aufeinander zu liegen kommen.

In Figur 6 ist gezeigt, wie eine erfindungsgemäße Begrenzung für ein Hochbeet in verschiedene Richtungen durch Anordnung weiterer Wandelemente **1** in einer gewünschten Richtung erweitert werden kann.

Die in der vorstehenden Beschreibung, in den Ansprüchen und in den Figuren offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste:

- 1: Wandelement
- 2: Erste Stirnseite
- 3: Zweite Stirnseite
- 4: Befestigungselemente
- 5: Erste Längsseite
- 6: Zweite Längsseite
- 7: Erster Abschnitt
- 8: Zweiter Abschnitt
- 9: Zwischenboden
- 9a: Zwischenbodenteile
- 10: Abschlussprofil
- 11: Leiste

## Patentansprüche

1. Begrenzung für ein Hochbeet, umfassend mehrere miteinander zu einer Einfassung verbundene Wandelemente (1), von denen jedes eine erste Stirnseite (2) und eine gegenüberliegende zweite Stirnseite (3) aufweist, die jeweils Befestigungselemente (4) aufweisen, wobei jedes Wandelement (1) außerdem eine zwischen der ersten Stirnseite (2) und der zweiten Stirnseite (3) verlaufende erste Längsseite (5) und eine dieser gegenüberliegende und ebenfalls zwischen der ersten Stirnseite (2) und der zweiten Stirnseite (3) parallel zu der ersten Längsseite (5) verlaufende zweite Längsseite (6) aufweist, wobei jedes Wandelement (1) an seiner ersten Stirnseite (2) und an seiner zweiten Stirnseite (3) mittels einer Steckverbindung mit einem benachbarten Wandelement (1) verbunden ist,
**dadurch gekennzeichnet, dass** jedes Wandelement (1) senkrecht zu beiden sich gegenüberliegenden Längsseiten (5,6) einen zwischen diesen verlaufenden Querschnitt aufweist, der alternierend angeordnete erste und zweite Abschnitte (7,8) umfasst, wobei sich die ersten Abschnitte (7) und die zweiten Abschnitte (8) in Bezug auf eine Längsmittelachse (L) des Querschnitts auf entgegengesetzten Seiten der Längsmittelachse (L) erstrecken, und wobei ein Zwischenboden (9) senkrecht zu den Wandelementen (1) in variabler Höhe innerhalb der durch die Wandelemente gebildeten Begrenzung anordnbar ist, indem dieser mit den ersten bzw. zweiten Abschnitten (7,8) gegenüberliegender Wandelemente (1) in Eingriff gebracht wird.

2. Begrenzung für ein Hochbeet nach Anspruch 1, **dadurch gekennzeichnet, dass** der Zwischenboden (9) mehrere Zwischenbodenteile (9a) umfasst.

3. Begrenzung für ein Hochbeet nach Anspruch 1 oder Anspruch 2, **dadurch gekennzeichnet, dass** jedes Wandelement (1) an einer seiner Längsseiten (5,6) ein Abschlussprofil (10) aufweist, das eine Platte umfasst oder aus dieser besteht, wobei das Wandelement (1) mit dem Abschlussprofil (10) auf einem Untergrund anordnbar ist.

4. Begrenzung für ein Hochbeet nach einem der voranstehenden Ansprüche, **dadurch gekennzeichnet, dass** Wandelemente (1) mit gleichen Abmessungen im demontierten Zustand, in dem diese keine Einfassung bilden, platzsparend stapelbar sind, indem die ersten Abschnitte (7) und die zweiten Abschnitte (8) mehrerer Wandelemente (1) bei Anordnung dieser Wandelemente (1) übereinander ohne Zwischenraum aufeinander zu liegen kommen.

5. Begrenzung für ein Hochbeet nach einem der voranstehenden Ansprüche, **dadurch gekennzeichnet, dass** die Wandelemente (1) ausschließlich mittels Steckverbindungen miteinander verbunden sind.

6. Begrenzung für ein Hochbeet nach einem der voranstehenden Ansprüche, **dadurch gekennzeichnet, dass** Wandelemente (1), die zu der gleichen Seite der Begrenzung für ein Hochbeet gehören, durch eine Leiste (11) voneinander beabstandet sind, die zwischen den Längsseiten (4, 5) zweier benachbarter Wandelemente (1) angeordnet ist.

7. Begrenzung für ein Hochbeet nach einem der voranstehenden Ansprüche, **dadurch gekennzeichnet, dass** die Wandelemente (1) aus Kunststoff, Holz oder Metall gefertigt sind und optional eine Beschichtung aufweisen.

8. Begrenzung für ein Hochbeet nach einem der voranstehenden Ansprüche, **dadurch gekennzeichnet, dass** zwei Wandelemente (1) in einem Winkel von etwa 90° miteinander verbunden sind, wobei die durch die Wandelemente (1) gebildeten Wände der Begrenzung zu einem beliebigen Zeitpunkt durch ein oder mehrere Wandelemente (1) in beliebige Richtung verlängerbar sind.

9. Verfahren zur Errichtung eines Hochbeetes mit den Schritten
- Bereitstellen mehrerer Wandelemente (1), von denen jedes eine erste Stirnseite (2) und eine gegenüberliegende zweite Stirnseite (3) aufweist, die jeweils Befestigungselemente (4) aufweisen, wobei jedes Wandelement (1) außerdem eine zwischen der ersten Stirnseite (2) und der zweiten Stirnseite (3) verlaufende erste Längsseite (5) und eine dieser gegenüberliegende und ebenfalls zwischen der ersten Stirnseite (2) und der zweiten Stirnseite (3) parallel zu der ersten Längsseite (5) verlaufende zweite Längsseite (6) aufweist, wobei jedes Wandelement (1) senkrecht zu beiden sich gegenüberliegenden Längsseiten (5,6) einen zwischen diesen verlaufenden Querschnitt aufweist, der alternierend angeordnete erste und zweite Abschnitte (7,8) umfasst, wobei sich die ersten Abschnitte (7) und die zweiten Abschnitte (8) in Bezug auf eine Längsmittelachse (L) des Querschnitts auf entgegengesetzten Seiten der Längsmittelachse (L) erstrecken;
- Verbinden jedes Wandelementes (1) an seiner ersten Stirnseite (2) und an seiner zweiten Stirnseite (3) mit einem benachbarten Wandelement (1), wobei die Verbindung mittels einer Steckverbindung erfolgt und wodurch eine Einfassung gebildet wird; und
- Anordnen eines Zwischenbodens (9) senkrecht zu den Wandelementen (1) in beliebiger Höhe innerhalb der durch die Wandelemente (1) gebildeten Einfassung, indem der Zwischenboden (9) mit den ersten bzw. zweiten Abschnitten (7,8) gegenüberliegender Wandelemente (1) in Eingriff gebracht wird.

10. Verfahren nach Anspruch 9, **dadurch gekennzeichnet, dass** auf dem Zwischenboden (9) Füllmaterial angeordnet wird, während unterhalb des Zwischenbodens (9) ein luftgefüllter Raum verbleibt, der durch den Zwischenboden (9), mehrere Wandelemente (1) sowie den Untergrund, auf dem die Wandelemente (1) zu einer Einfassung angeordnet sind, begrenzt wird.
